# EUROPÄISCHE PATENTSCHRIFT

(11) **EP 0 693 013 B1**
(45) Veröffentlichungstag und Bekanntmachung des Hinweises auf die Patenterteilung: **20.05.1998**
(21) Anmeldenummer: 94908974.2
(22) Anmeldetag: 11.03.1994
(51) Int. Cl.: B23B 29/04

(54) **MODULARES WERKZEUGSYSTEM**
MODULAR TOOL SYSTEM
SYSTEME MODULAIRE D'OUTIL

(30) Priorität: 05.04.1993 DE 4311109
(43) Veröffentlichungstag der Anmeldung: 24.01.1996
(73) Patentinhaber: Widia GmbH, 45145 Essen (DE)
(72) Erfinder: VON HAAS, Rainer, D-21502 Geesthacht (DE)
(74) Vertreter: Vomberg, Friedhelm, Dipl.-Phys.
(86) Internationale Anmeldenummer: DE9400272
(87) Internationale Veröffentlichungsnummer: WO9422623

(56) Entgegenhaltungen:
- EP-A- 0 257 005
- CH-A- 351 158
- PATENT ABSTRACTS OF JAPAN vol. 10, no. 118 (M-475) (2175) 2. Mai 1986 & JP,A,60 249 508 (HONDA GIKEN KOGYO) 10. Dezember 1985

## Beschreibung

Die Erfindung betrifft ein modulares Werkzeugsystem, bestehend aus einem Werkzeughalter mit einer Aufnahme für einen Schneideinsatzhalter.

Die JP-A-60-249 508, das als nächstliegender Stand der Technik angesehen wird, beschreibt eine Werkzeughaltereinheit mit einem darin befestigten Positionierelement, das in radialer Richtung feinjustierbar ist. Hierzu dient eine Justierschraube, deren Kopf unmittelbar in eine Ausnehmung des Führungselementes eingreift, das Teil des genannten Positionierelementes ist. Das Positionierelement weist auf beiden Seiten eines Anlageringes unterschiedliche Durchmesser auf. Das Positionierelement wird über eine weitere Scheibe an einem der Halter festgeschraubt.

Zu eingangs genannten Werkzeugsystemen gehört beispielsweise der in der DE 16 27 012 C3 beschriebene Bohrkopf oder ein anderer Werkzeughalter an einer Bohrspindel, bei dem der Schneidwerkzeughalter radial beweglich ist und mit einer Schwalbenschwanzleiste in einer in der Stirnseite des mit der Bohrspindel fest verbundenen Teiles diametral verlaufenden Schalbenschwanznut geführt ist. Die Schwalbenschwanznut besitzt einen von ihrer Basis ausgehenden Spannschlitz, der von einer Spannschraube durchsetzt ist, deren Betätigung zu einer durch die plane Anlage der Stirnseiten der beiden Teile axialen Ausrichtung des Schneidwerkzeughalters führt. Die Einstellschraube stützt sich auf einem fest mit der Bohrspindel verbundenen Stift ab.

Die DE 26 25 983 A1 beschreibt ein Bohrwerkzeug mit zwei einzeln verstellbaren Schneiden, die mittels einer Kerbverzahnung oder anderen Gleitführung quer zur Werkzeugachse an einem Aufnahmekörper gleitverschieblich geführt und an diesem durch Feststellschrauben fixierbar sind. In einer quer zur Werkzeugachse verlaufenden Ausnehmung des Aufnahmekörpers parallel zu den Schneiden sind zwei Spannmuttern für die Feststellschrauben verschiebbar angeordnet. Die mit ihren Köpfen an den Schneiden angreifenden Feststellschrauben verlaufen in Schlitzen des Aufnahmekörpers schräg zur Werkzeugachse zu den Spannmuttern hin.

In der EP 0 175 011 B1 wird ein drehbares Zerspanungswerkzeug, insbesondere ein Ausbohrkopf oder dergleichen, mit einer Feineinstellschraube im Schneidenträger beschrieben, die quer zu der Befestigungsschraube für den Schneidenträger angeordnet ist und an der Außenseite einer Hülse angreift, die auf dem zylindrischen Teil der Befestigungsschraube sitzt. Zudem ist die Verzahnung der Auflage zwischen den radial gegeneinander verschieblich angeordneten Teilen sägezahnförmig mit steilen und mit schrägen Zahnflanken ausgebildet.

Auch bei Stecheinsätzen wird eine Höhenverstellbarkeit gefordert, um die gewünschte Mitteneinstellung zu ermöglichen. Die beispielsweise aus der EP 0 257 005 B1 und EP 0 300 544 B1 bekannten Stechwerkzeuge besitzen einheitlich einen klingenförmigen Schneidenträger, der zwischen gegenüberliegenden Führungsflächen eines Werkzeugschaftes führbar und mittels Spannschrauben am Werkzeugschaft befestigt ist, aber keine Möglichkeit der Höhenverstellung aufweist.

Die DE 36 22 638 A1 beschreibt einen Bohrkopf mit vorkopf liegenden Schneiden. Dieser Bohrkopf besitzt einen Bohrkopfkörper, der mit einer Bohrstange verbindbar ist und an dessen Stirnseite mindestens ein mit einer Schneide versehener Schneidenträger radial verschiebbar geführt und gehalten ist und mittels einer gegen ein Widerlager sich abstützenden Positionierschraube radial einstellbar und mittels einer durch einen Längsschlitz greifende Befestigungsschraube gegen eine Anlage festspannbar ist. Diese Auflage ist eine ebene Fläche, in welche eine über den Mittelpunkt verlaufende Führungsnut eingearbeitet ist, in deren Längsmitte ein Widerlager angeordnet ist, in dem zwei als Gewindestifte ausgebildete Positionierschrauben in Längsrichtung der Führungsnut einstellbar geführt sind. Das Widerlager ist Teil eines Widerlagerbolzens, der auswechselbar in einer Bohrung des Bohrkopfkörpers gehalten ist. Der Widerlagerbolzen besitzt eine Abflachung, gegen die ein Klemmstift anpreßbar ist, der einstellbar im Bohrkopfkörper gelagert ist und mit seiner Stirnseite gegen die Abflachung des Widerlagerbolzens drückt. Durch diese Ausführung des Widerlagers soll erreicht werden, daß bei Auftreten von extremen Kräften und Zerstörung des Widerlagers nicht der Bohrkopf unbrauchbar wird, sondern nur ein neuer Widerlagerbolzen eingesetzt werden muß.

Es ist Aufgabe der vorliegenden Erfindung, ein modulares Werkzeugsystem der eingangs genannten Art, insbesondere auch für Abstechwerkzeuge, derart weiterzuentwickeln, daß ohne großen konstruktiven Aufwand eine Radialverstellung der Werkzeuge oder eine zentrierte Fixierung ohne Nachstellmöglichkeit alternativ möglich sind.

Diese Aufgabe wird mit dem im Anspruch 1 beschriebenen modularen Werkzeugsystem gelöst. Hierbei ist die Aufnahme für den Schneideinsatzhalter gegenüber dem Werkzeughalter wahlweise
a) radial einstellbar, nämlich mittels einer Einstellschraube, wobei ein lösbarer Bolzen so montiert ist, daß die Einstellschraube auf dessen kleineren Durchmesser seines vorderen Endes drückt, oder ein Bolzen in eine Bohrung des Schneideinsatzhalters montiert ist, dessen herausragendes Ende in eine mit einem größeren Durchmesser ausgebildete Bohrung des Werkzeughalters ein Radialspiel freilassend ragt oder
b) ohne radiale Einstellbarkeit zentriert fixierbar, wobei der Bolzen so montiert ist, daß er mit seinem im Durchmesser größeren Ende sowohl in der Bohrung des Schneideinsatzhalters als auch in der Bohrung des Werkzeughalters satt anliegt oder ein Bolzen mit unterschiedlichen Durchmessern in den jeweiligen unterschiedlich großen Bohrungen des Schneideinsatzhalters und des Werkzeughalters jeweils satt anliegt.

Mit Hilfe des Bolzens nach der ersten Ausführungsform wird eine radiale Verschiebbarkeit des Schneideinsatzhalters erreicht und durch Anwendung einer anderen Bolzenausbildung eine Zentrierung zwischen Werkzeughalter und Schneideinsatzhalter ermöglicht.

Insbesondere kann der Anschlag ein lösbar im Halter befestigbarer Bolzen sein, an dessen einem Ende Abflachungen sind und der mit einem einen kleineren Durchmesser aufweisenden anderen Ende versehen ist, dessen Außenmantel als Abstützanschlag dient.

Der Vorteil dieses Systems liegt darin, daß der Bolzen - wie im Prinzip nach dem Stand der Technik bekannt - mit seiner Mantelfläche als Abstützfläche für Radialverschiebungen bzw. Einstellungen genutzt werden kann. Wird der Bolzen hingegen um 180° gedreht und mit seinem anderen Ende eingesteckt, arretiert das überstehende Ende den zuvor noch radial beweglich führbaren Schneideinsatzhalter, wenn der Bolzen in der Sackbohrung satt anliegt. Die Einstellschraube ist zuvor selbstverständlich so weit zurückzudrehen, daß sie das Einfügen des Bolzenendes mit dem größeren Durchmesser in die Sackbohrung nicht behindern kann.

Weiterbildungen der Erfindung sind in den Unteransprüchen beschrieben.

Vorzugsweise ist der Schneideinsatzhalter eine Klemmleiste für einen Abstechschneideinsatz, welcher in einem dortigen Klemmschlitz lösbar befestigt ist.

War es nach dem Stand der Technik bisher üblich, zur Kühlmittelzufuhr ein Rohr vorzusehen, das vom Werkzeugschaft oder Werkzeuggrundhalter ausgehend bogenförmig zur Schneidenebene geführt wird, wird nach einer Weiterbildung der Erfindung die Kühlmittelzufuhr im Werkzeughalter (Schneideinsatzträger) integriert, in dem das Kühlmittel durch den Bolzen sowie über zum Schneideinsatz führende Kühlmittelbohrungen geführt wird. Der Bolzen ist demnach mit einer Mittenbohrung ausgestattet, durch die das Kühlmittel in den vorderen Bereich der Sacklochbohrung des Schneideinsatzhalters gelangt, von wo aus es durch die Kühlmittelbohrung zum Schneideinsatz geführt wird. Diese Kühlmittelführung ist wesentlich geschützter als die weiter überkragende Kühlmittelzuführung nach dem Stand der Technik.

Nach weiteren Ausgestaltungen ist der Bolzen durchgehend zylinderförmig oder zylinderförmig mit abgeflachten Seiten oder im Querschnitt mehreckig ausgebildet.

Nach einer weiteren Ausgestaltung der Erfindung ist der Bolzen zylinderförmig mit einem einen kleineren Durchmesser aufweisenden Ende ausgebildet oder zylinderförmig mit auf der einen Seite einen kleineren Durchmesser aufweisenden Ende und auf der anderen Seite zylinderförmig mit abgeflachten Seiten oder im Querschnitt mehreckig ausgebildet ist.

Ausführungsformen der Erfindung sind in den Zeichnungen dargestellt. Es zeigen
- Fig. 1: einen Teilquerschnitt durch einen Werkzeughalter mit Schneideinsatzhalter,
- Fig. 2: eine Seitenansicht der Ausführung nach Fig. 1 und
- Fig. 3: eine Draufsicht auf dieselbe Ausführungsform von oben, ohne Bolzen gezeichnet,
- Fig. 4 und 5: den Fig. 1 und 2 entsprechende Ausführungsformen mit um 180° gedreht gestecktem Bolzen und
- Fig. 6a, 6b: entsprechende Ansichten eines vierten Werkzeughalters mit Schneideinsatzhalter.

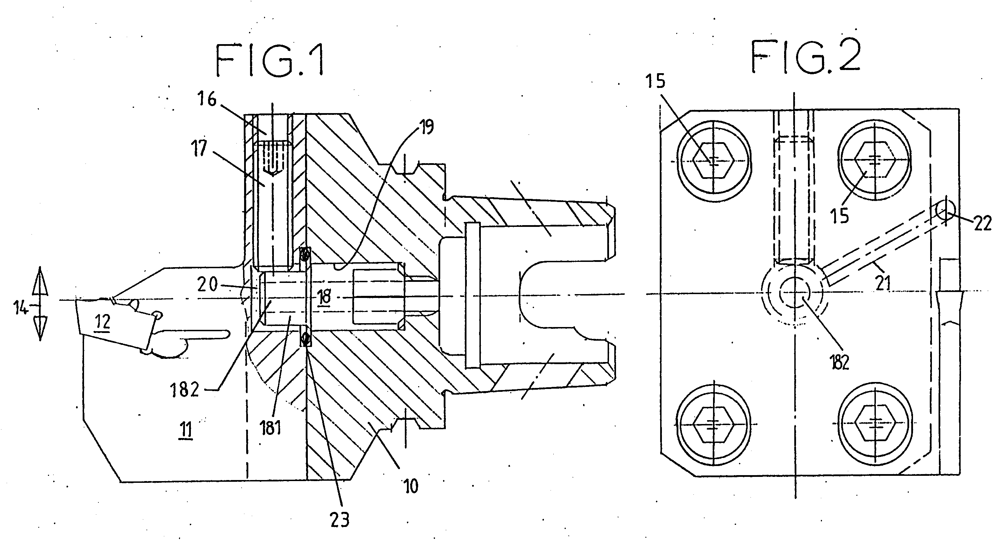

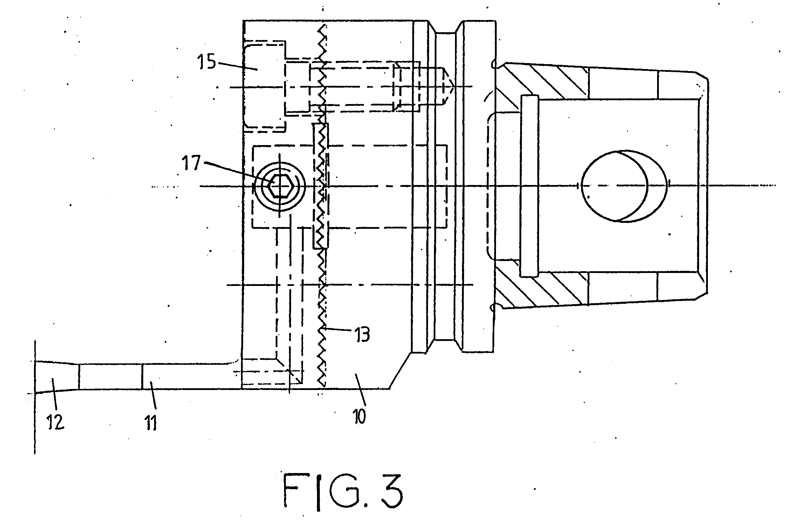

Werkzeugsysteme sind im Prinzip bekannt und bestehen regelmäßig aus einem Werkzeuggrundhalter, der z.B. auch eine Revolverscheibe sein kann, einem Werkzeughalter 10, der am Grundhalter befestigbar ist, einem Schneideinsatzhalter 11, der im vorliegenden Fall als Klemmleiste für den Schneideinsatz 12 ausgebildet ist. Die stirnseitige Kupplungsstelle zwischen dem Werkzeughalter 10 und dem Schneideinsatzhalter 11 besitzt jeweils verzahnte, ineinandergreifende Anlageflächen (siehe Fig. 3), so daß der Schneideinsatzhalter 11 zusammen mit dem eingeklemmten Schneideinsatz 12 in Richtung des Doppelpfeiles 14 bei gelösten Spannschrauben 15 (siehe Fig. 2, 3) höhenverstellbar ist. Wie aus dem bereits eingangs genannten Stand der Technik bekannt, besitzt der Schneideinsatzhalter eine Gewindebohrung 16, in der eine Einstellschraube 17 angeordnet ist, worüber die Höhenverstellung des Werkzeuges nach Fig. 1 bis 3 erfolgen kann. Die Einstellschraube 17 stützt sich auf das erste Ende 181 eines Bolzens 18 ab, der in einer Bohrung 19 des Werkzeughalters 10 satt anliegend eingesteckt ist. Das vordere Ende des Bolzens 18 ragt in eine Sackbohrung 20 des Schneideinsatzhalters 11 herein, deren Durchmesser ebenso groß ist wie der Durchmesser der Bohrung 19 des Werkzeughalters 10. Durch den kleineren Durchmesser des vorderen Endes 181 kann der Schneideinsatzhalter bei Betätigung der Einstellschraube 17 dem verbleibenden Spiel entsprechend höhenverschoben werden. Der Bolzen 18 besitzt ferner eine mittlere Durchgangsbohrung 182, worüber Kühlmittel angefördert und über eine weitere Bohrung 21 im Schneideinsatzhalter abgefördert werden kann, von wo aus über eine weitere Bohrung 22 das Kühlmittel an den Zerspanungsort gefördert wird. Die Bohrungsanschlußstellen sind durch O-Ringe 23 abgedichtet.

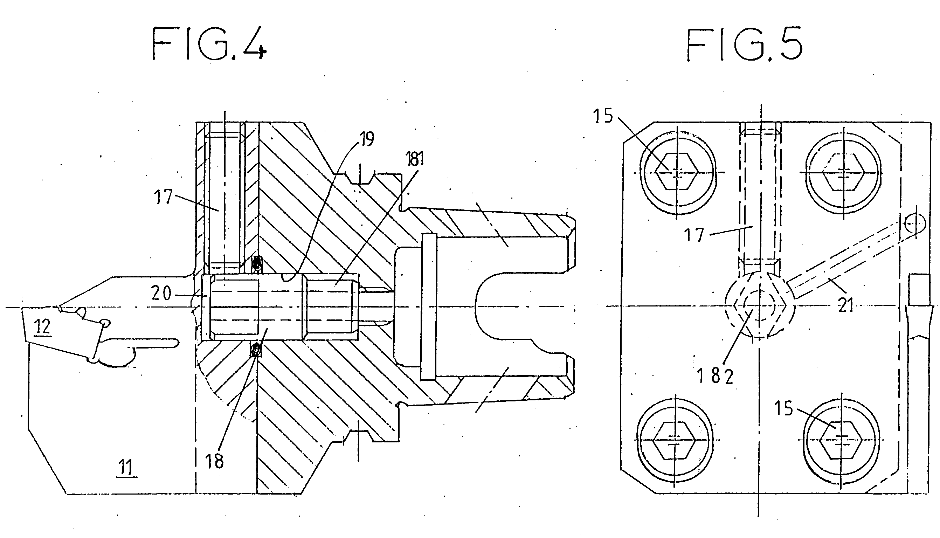

Für den Fall, daß auf die Höhenverstellbarkeit des Schneideinsatzes 12 bzw. des Schneideinsatzhalters 11 verzichtet werden soll, wird der Bolzen 18 aus der Bohrung 19 herausgezogen, um 180° gedreht und mit seinem anderen Ende eingesteckt, so daß der Bolzen sowohl in der Bohrung 19 als auch in der Bohrung 20 jeweils satt anliegt. Die Einstellschraube 17 ist selbstverständlich vorher mit ihrem vorderen Ende aus der Bohrung 20 herauszuschrauben. In dieser Lage des Bolzens 18 ist keine Höhenverstellung mehr möglich. Das vordere Bolzenende 181 ist geringfügig kleiner als die Tiefe der Sackbohrung 20 ausgeführt, wobei diese Länge deutlich kleiner ist als die verbleibende Länge des Bolzens 18, der in der in Fig. 4 dargestellten Lage mit seinem größeren Durchmesser einen genügenden festen Sitz in den Bohrungen 19 und 20 haben muß.

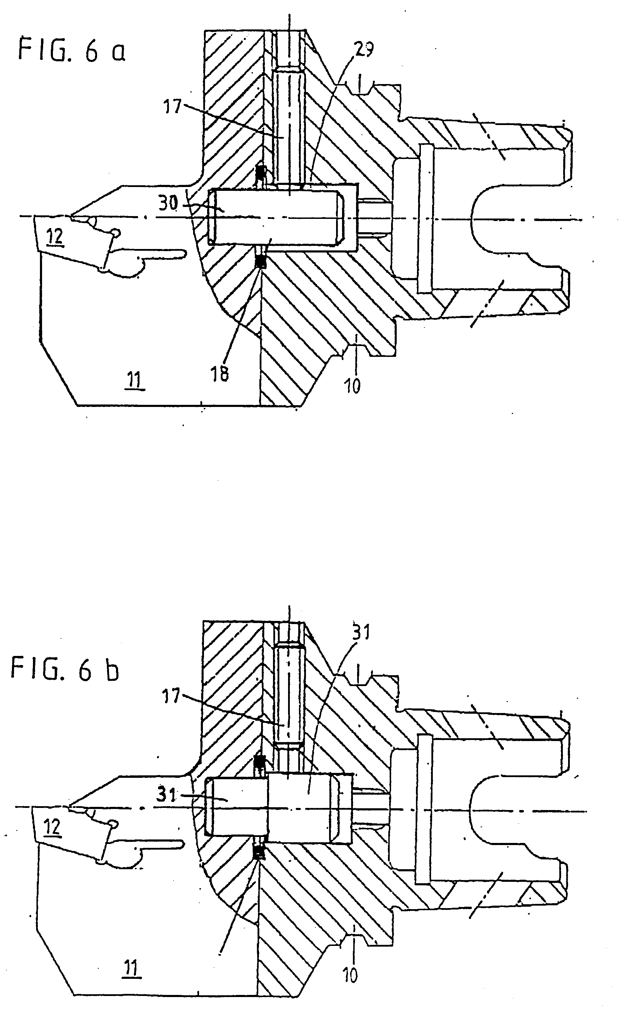

Die Ausführungsform nach Fig. 6a und 6b unterscheidet sich von dem vorliegend Beschriebenen dadurch, daß der Bolzen im Schneideinsatzhalter 11 befestigt ist und in eine Bohrung 29 des Werkzeughalters hineinragt, deren Durchmesser größer als der der Schneideinsatzhalterbohrung ist. Der Bolzen 30 (Fig. 9a) ist zylindrisch und mit einem über seine Länge konstanten Durchmesser ausgebildet, während der Bolzen 31 einen kleineren, dem Schneideinsatzhalterdurchmesser entsprechenden Durchmesser und einen größeren Durchmesser hat, so daß der Bolzenmantel in der Bohrung des Werkzeughalters (10) satt anliegt (d.h., beide Halter 10, 11 haben Maßbohrungen).

## Patentansprüche

1. Modulares Werkzeugsystem, bestehend aus einem Werkzeughalter (10) mit einer Aufnahme für einen Schneideinsatzhalter (11), der gegenüber dem Werkzeughalter (10) wahlweise
a) radial einstellbar ist, nämlich mittels einer Ein stellschraube (17), wobei ein lösbarer Bolzen (18) so montiert ist, daß die Einstellschraube (17) auf dessen kleineren Durchmesser seines vorderen Endes (181) drückt, oder ein Bolzen (30) in eine Bohrung des Schneideinsatzhalters (11) montiert ist, dessen herausragendes Ende in eine mit einem größeren Durchmesser ausgebildete Bohrung (29) des Werkzeughalters (10) ein Radialspiel freilassend ragt oder
b) ohne radiale Einstellbarkeit zentriert fixierbar ist, wobei der Bolzen (18) so montiert ist, daß er mit seinem im Durchmesser größeren Ende sowohl in der Bohrung (20) des Schneideinsatzhalters (11) als auch in der Bohrung (19) des Werkzeughalters (10) satt anliegt oder ein Bolzen (31) mit unterschiedlichen Durchmessern in den jeweiligen unterschiedlich großen Bohrungen des Schneideinsatzhalters (11) und des Werkzeughalters (10) jeweils satt anliegt.

2. Werkzeugsystem nach Anspruch 1, dadurch gekennzeichnet, daß der Schneideinsatzhalter (11) eine Klemmleiste für ein Abstechwerkzeug (12) ist.

3. Werkzeugsystem nach einem der Ansprüche 1 oder 2, dadurch gekennzeichnet, daß durch den Bolzen (18, 30, 31) sowie im Schneideinsatzhalter (11) befindliche, zum Schneideinsatz (12) führende Kühlmittelbohrungen (21, 22) vorgesehen sind.

4. Werkzeugsystem nach einem der Ansprüche 1 bis 3, dadurch gekennzeichnet, daß der Bolzen (18) zylinderförmig mit an einer Seite abgeflachten Seiten oder im Querschnitt mehreckig ausgebildet ist.

5. Werkzeugsystem nach einem der Ansprüche 1 bis 4, dadurch gekennzeichnet, daß der Bolzen (18) zylinderförmig mit einem einen kleineren Durchmesser aufweisenden Ende ausgebildet ist.

6. Werkzeugsystem nach einem der Ansprüche 1 bis 5, dadurch gekennzeichnet, daß der Bolzen (18) zylinderförmig mit auf der einen Seite einen kleineren Durchmesser aufweisenden Ende und auf der anderen Seite zylinderförmigen mit abgeflachten Seiten oder im Querschnitt mehreckig ausgebildet ist.

## Claims

1. A modular tool system comprising a tool holder (10) with a seat for a cutting insert holder (11), which is optionally relative to the tool holder (10)
a) radially adjustable by means of an adjustment screw (17), whereby a disengagable bolt (18) is installed in that way that the adjustment screw (17) clamps on the foremost end (181) of the smaller diameter, or that a bolt (30) is installed in a bore-hole of the cutting insert holder (11), whereby the profecting end of the bolt (30) rises with radial space around in a bore-hole (29) with a greater diameter of the tool-holder (10) or
b) without radial adjustment centrally engagable, whereby the bolt (18) is installed that way that with its end with a greater diameter not only rests fully in the bore-hole (20) of the cutting insert holder (11) but also in the bore-hole (19) of the tool-holder (10) or a bolt (31) with different diameters rests fully in the given different-sized bore-holes of the cutting insert holder (11) and the tool-holder (10).

2. Tool system according to claim 1, characterised in that the cutting insert holder (11) is a clamping block for a tapping tool (12).

3. Tool system according to one of claims 1 or 2, characterised by coolant bores (21, 22) through the bolt (18, 30, 31) as well as through the cutting insert holder (11) leading to the cutting insert (12).

4. Tool System according to one of claims 1 to 3, characterised in that the bolt (18) is shaped either cylindrically with flattened sides on one side or polygonal in sectional view.

5. Tool system according to one of claims 1 to 4, characterised in that the bolt (18) is shaped cylindrically with a smaller diameter at the end.

6. Tool system according to one of claims 1 to 5, characterised in that the bolt (18) is formed cylindrically with a smaller diameter on one end and on the other side cylindrically with flattened sides or polygonal in sectional view.

## Revendications

1. Système modulaire d'outil, se composant d'un porte-outil (10) avec un logement pour un support (11) de l'insert de coupe, qui, par rapport au porte-outil (10) est facultativement
a) radialement réglable, à savoir par le biais d'une vis de réglage (17), un boulon (18) amovible étant monté de telle manière que la vis de réglage (17) pousse sur le diamètre plus petit de son extrémité avant (181), ou un boulon (30) étant monté dans un perçage du support (11) de l'insert de coupe, dont l'extrémité en saillie s'étend dans un perçage (29) avec un diamètre plus grand du porte-outil (10) de manière à laisser libre un jeu radial, ou
b) fixable de manière centrée sans ajustage radial, le boulon (18) étant monté de telle manière que, avec son extrémité ayant un diamètre plus grand, il s'applique complètement aussi bien dans le perçage (20) du support (11) de l'insert de coupe que dans le perçage (19) du porte-outil (10), ou un boulon (31) ayant des diamètres différents s'appliquant respectivement complètement dans les perçages respectifs de grandeur différente du support (11) de l'insert de coupe et du porte-outil (10).

2. Système d'outil selon la revendication 1, caractérisé par le fait que le support (11) de l'insert de coupe est une réglette de serrage pour un outil à tronçonner (12).

3. Système d'outil selon l'une des revendications 1 ou 2, caractérisé par le fait que l'on prévoit des perçages à réfrigérant (21, 22) à travers le boulon (18, 30, 31) ainsi que dans le support (11) de l'insert de coupe, qui mènent vers l'insert de coupe (12).

4. Système d'outil selon l'une des revendications 1 à 3, caractérisé par le fait que le boulon (18) est formé de façon cylindrique avec, de l'un des côtés, des côtés aplatis ou, en coupe transversale, de façon polygonale.

5. Système d'outil selon l'une des revendications 1 à 4, caractérisé par le fait que le boulon (18) est réalisé de façon cylindrique avec une extrémité présentant un diamètre plus petit.

6. Système d'outil selon l'une des revendications 1 à 5, caractérisé par le fait que le boulon (18) est réalisé de façon cylindrique avec, sur l'une des extrémités, une extrémité ayant un diamètre plus petit et, sur l'autre extrémité, de façon cylindrique avec des côtés aplatis ou, en coupe transversale, de façon polygonale.
